# EUROPEAN PATENT SPECIFICATION

(11) **EP 2 627 562 B1**
(45) Date of publication and mention of the grant of the patent: **26.04.2017**
(21) Application number: 11805746.2
(22) Date of filing: 13.10.2011
(51) Int. Cl.: B64D 45/00, B64F 5/00, G01M 3/04, F15B 19/00

(54) **SENSOR FOR DETECTING HYDRAULIC LIQUIDS IN AIRCRAFT**
SENSOR ZUR DETEKTION VON HYDRAULISCHEN FLÜSSIGKEITEN IN FLUGZEUGEN
CAPTEUR PERMETTANT DE DÉTECTER DES FLUIDES HYDRAULIQUES DANS UN AVION

(30) Priority: 13.10.2010 GB 201017238
(43) Date of publication of application: 21.08.2013
(73) Proprietor: Katholieke Universiteit Leuven, 3000 Leuven (BE)
(72) Inventor: PFEIFFER, Helge, B-3111 Wezemaal (BE); WEVERS, Martine, B-3700 Tongeren (BE)
(74) Representative: Pronovem
(86) International application number: PCT/BE2011/000060
(87) International publication number: WO 2012/048390

(56) References cited:
- DE-A1- 2 822 769
- DE-A1- 10 336 679
- DE-A1- 19 963 188
- US-A- 2 691 134
- US-B1- 7 631 666
- H. PFEIFFER, P. HEER AND M. WEVERS: "Project overview AISHA II and the detection of corrosive and hydraulic liquids by gauges based on the collapse of percolation conductivity.", 1ST EASN (EUROPEAN AERONAUTICS SCIENCE NETWORK) ASSOCIATION WORKSHOP ON AEROSTRUCTURES, SURESNE (PARIS), 8 October 2010 (2010-10-08), XP002673848,

## Description

### Background and Summary

### BACKGROUND OF THE INVENTION

### A. Field of the Invention

The present invention relates generally to a system that monitors the condition of hydraulic systems for an aircraft or for other applications and, more particularly, to a system and method for detecting leakage within the hydraulic system aboard an aircraft. Such system is detecting hydraulic liquids by extended sensors based on the collapse of percolation conductivity (COPC) which sensors are covering an area in the aircraft.

COPC is disclosed in the paper "Project overview AISHA II and the detection of corrosive and hydraulic liquids by gauges based on the collapse of percolation conductivity." by H. PFEIFFER, P. HEER AND M. WEVERS. This document discloses all the features of the preamble of independent claim 1.

### B. Description of the Related Art

Aircraft hydraulic systems can be a challenge to design engineers, due to many constraints that are not encountered when designing a system for fixed or other mobile applications. Hydraulic technology first appeared in aircraft flight control after World War II, when fluid power was introduced for the control of some secondary systems. Nevertheless, as aircraft flight performance and capabilities increased, hydraulics began to play a larger role in the critical operation and safety of airliners, helicopters, and military aircraft.

Typically the hydraulic systems of an aircraft comprises a pressurized reservoir and a hydraulic circuit containing a desired amount of hydraulic fluid. Some of the places that hydraulics come into play include primary flight controls, landing gear, flap/slat drives, nose wheel steering, thrust reversers, spoilers, rudders, cargo doors, and emergency hydraulic-driven electrical generators. Factors that must be addressed on an aircraft include pressure conditions (both internal and ambient), temperature extremes, weight, speed, materials, reliability, fluid compatibility, leaks, cost, noise, and redundancy. While such systems are generally quite reliable, it is possible that they can and will lose fluid over time. Loss of fluid can result in system dysfunction, component failure and unscheduled maintenance.
It is typical that loss of hydraulic fluids starts at pinhole cracks. Due to the high pressure, the hydraulic liquid is transformed into an aerosol that pollutes the air in the respective compartments. This process is comparable with the vaporization of liquids by sprays nozzles. While periodic inspection of the hydraulic system is desirable, it would also be advantageous to automatically detect the loss of hydraulic fluid at a very early stage in order to monitor system health and conduct required maintenance, before more serious problems occur. Even with redundant systems, hydraulic leaks still pose problems to the safe operation of aircraft and have even resulted in the direct injury of passengers (via fluid spilled on to them).

Leakage of hydraulic liquids through cracks and other kinds of structural damage will have severe consequences. The loss of essential amounts of hydraulic liquid will result in failure of the hydraulic system and with it, acute danger for aircrafts operation exists. Furthermore, hydraulic liquids are known to be harmful for different kind of structural materials used in aircraft, last but not least most of these compounds are irritating for human skins and the respiratory tract. Last but not least, hydraulic liquid leaving pinhole cracks at high pressures are dangerous because they are able to injure human bodies just by the high velocity of the aerosol beam leaving the tube. However, if monitoring technologies are in place providing continuous information on the presence of leaked hydraulic liquids, repair of the structural elements can start at a very early stage.

In nowadays maintenance operation, leakage of hydraulic liquids can in some sections be monitored by visual inspection. However, there are hidden spaces that are difficult to access. Problems with hydraulic leakage can be detected only at regular heavy inspections or when leakage gets obvious, when hydraulic liquids enter the passenger cabin during aircraft operations (Brussels Airlines incident in Nov 2009). A monitoring system would thus essentially enhance passenger's safety and enable huge cost savings when the presence of leaked hydraulic liquids could be detected at a very early stage. The challenge for inspection is that always hidden space difficult to access and finally the difference between baseline variations at normal operations and the signals after leaking hydraulic liquids, the price of the instrumentation, certification issues etc. A related patent (US6717664) proposes an optical fibre system to enable the use of a horoscope for inspecting longer distances in the hidden space of the floor beam area of aircraft. However, this would nevertheless require time-consuming manual inspections and probably not all surfaces would be visible. Furthermore, at the first steps of leakage, liquids are dispersed into an aerosol due to the high pressure difference between the outside and the inside of the hydraulic tube

Currently, sensors are frequently used to monitor hydraulic system operation. In the case of a car or truck, a sensor can be used to monitor the pressure the system is applying to the brake lines. In the case of aircraft, they are typically more complex sensor systems including, for example, a quantity gauge to measure the quantity of fluid in the low pressure reservoir chamber, a pressure transducer and a temperature transducer.

However the current protocols for leak detection in the hydraulic systems require the aircraft to be running, since changes in pressure in the system are used to determine if there is a leak is indeed present within the system.

Recent developments in the field focus on improving the current sensor setup that already is in place. An example of this is patent US2010030496, in which a real-time hydraulic pressure surveillance system ensures that leaks are detected in a timely manner and offers a prognostic ability to foresee future fluid levels. This still requires the need for the hydraulic system to be running and it would require some form of calibration for best monitoring results. The use of pre-determined control values could be employed, yet a level of tolerance and variability between aircraft of the same type exists, due to maintenance history as well as flight history. In addition, the number of leaks do increase with the age of the aircraft. Therefore the system would need to be calibrated for each aircraft to be an effective system. Furthermore, although it can predict future drops of fluid levels, it does not necessarily indicate where a leak will occur or is occurring.

Leakage of hydraulic liquids through cracks and other kinds of structural damage will have severe consequences. In nowadays maintenance operation, leakage of hydraulic liquids is in some sections monitored by visual inspection. However, there are hidden spaces that are difficult to access. In this context, inaccessible tubes are sometimes surrounded by a shroud system making that leaked hydraulic liquid flows into sections where it is less harmful and where its presence can be visually detected. However, those shrouds are expensive to install when not yet available and small amounts leaving the system at very fine hair cracks will remain undiscovered because the hydraulic liquid leaves the tube as an aerosol due to the high pressure inside the tube (the pressure can range up to several hundreds bar). A reliable sensor for hydraulic liquids which is frequently interrogated could help to reduce the danger of pressure drop in hydraulic systems and incidents when hydraulic liquids come in contact with passenger area.

There exist other detection systems which are based on visual recognition of the leak. This is possible with the addition of a dye to the hydraulic fluid. The advantage of this method is the quick identification of the leak itself and the low cost. Useful for areas that are easily accessible (such as the landing gear). The disadvantage is if the leak occurs in a location which is not readily accessible. Therefore, the only means to find such a leak is through a full inspection of the aircraft or when already troubleshooting a drop in hydraulic pressure.

The main issues with current detection systems (and their improvements) is their basis on measuring the hydraulic fluid itself, either in difference of pressure or amount, or through visual identification, or a combination of both. In addition, some of these detection systems can add complexity and might require non-trivial modification of the hydraulic system if installed.

Thus, there is a need in the art for a method to detect leaks in the hydraulic system, which would allow for the required maintenance to be done when needed, without the need for major modifications to the hydraulic system itself and to be easy to implement and not require the aircraft to be functioning.

In the present invention, which provides a means to detect hydraulic liquids by extended sensors (covering a larger area) based on the collapse of the percolation conductivity (COPC) of a composite comprising a conducting compound which is embedded in a matrix that is solvable in the respective hydraulic liquid, provides the advantage that it can sense

The components are mixed in an appropriate ratio, resulting in a composition so that the composite is above the percolation threshold.
When this composite is exposed to hydraulic liquids, the system takes up liquid until the conductivity is essentially lost. The increase of the resistance due to the ingress of hydraulic liquid can be monitored by a digital multi-channel multimeter that is equipped with appropriate data logging facilities.

The applicability of the integral system of present invention is in situ continues, or under frequently interrogation sense hydraulic deficiencies on any for inspection difficult accessible space without the requirement to have the hydraulic system to be running and without the need of calibration for best monitoring results. Such system can at any moment reduce the danger of pressure drop in hydraulic systems and incidents when hydraulic liquids come in contact with the passenger area.

### SUMMARY OF THE INVENTION

The present invention solves the problems of the related art by using a system to detect leakage, based on the percolation threshold of a conducting compound in a hydrophilic matrix.

The present invention concerns a system that monitors a ondition of a hydraulic system for an aircraft according to independent claim 1 and an aircraft comprising said system according to claim 14.

In a particular embodiment, the aircraft hydraulic fluid in said aircraft is a phosphate-ester based aircraft hydraulic fluid, for instance the aircraft hydraulic fluids is of the group consisting of BMS 3-11: Skydrol 500B-4, Skydrol LD-4, Skydrol 5 and Exxon HyJetIV-A plus. This embodiment of the invention advantageously the aircraft hydraulic fluids is Skydrol ® 500 B. furthermore in this embodiment advantageously the conductive particles are of the group consisting metal particle, a particle coated by said metal, a carbon black particles or particles of conductive ceramics or the metal particle is nickel, cupper or silver or a particle coated with nickel, cupper or silver. This embodiment of the invention advantageously the matrix is an acrylic resin. This acrylic resin can comprise methyl methacrylate monomer (MMA) and or Polymethyl methacrylate (PMMA). In an advantageous embodiment, the aircraft according to the present invention comprises a gauge, whereby the composite comprises nickel powder in acrylic matrix.
Some of the techniques described above may be embodied as that in the gauge after exposure to hydraulic liquid the resistance in the composite increases which can be displayed on a screen after processing in that the curve of resistance (Ohm) vs. time (min) shows an increase in the resistance.

The aircraft hydraulic liquid leakage monitor of the aircraft of present invention has the sensing tape, sheet or fabric [2] surrounding or s winded around the hydraulic tube [1] of at least part of the hydraulic system such to capture into the sensing materials the leaked hydraulic liquids that are otherwise dispersed into an aerosol due to the high pressure difference between the outside and the inside of the hydraulic tube. Some of the techniques described above may be embodied as that the matrix does not resist an attack by aviation hydraulic fluid in the hydraulic aircraft system whereby in a specific embodiment that the matrix does not resist an attack by or contact with aviation phosphate ester fluids.
Some of the techniques described above may be embodied as that the conductivity of the sensing material is interrupted as consequence of the absorption of the aircraft hydraulic fluid into the matrix embedding the electrically-conductive material powder or particles by transition through the threshold of percolation conductivity (collapse of percolation conductivity, COPC) into the non-conductive state. Thus, in certain embodiments of the present invention, the aircraft hydraulic liquid leakage monitor according to any one of the embodiments above comprises a matrix does not resist an attack by or contact with a phosphate-ester based aircraft hydraulic fluid, for instance it does not resist an attack by or contact with aircraft hydraulic fluids of the group consisting of BMS 3-11: Skydrol 500B-4, Skydrol LD-4, Skydrol 5 and Exxon HyJetIV-A plus or it concerns a matrix that does not resist an attack by or contact with aircraft hydraulic fluid, Skydrol ® 500 B.
In an advantageous embodiment, the aircraft hydraulic liquid leakage monitor according to any one of the embodiments to the present invention comprises conductive particles are of the group consisting metal particle, a particle coated by said metal, a carbon black particles or particles of conductive ceramics. In case of a metal particle this can nickel, cupper or silver or a particle coated with nickel, cupper or silver. In an advantageous embodiment, the aircraft hydraulic liquid leakage monitor according to any one of the embodiments to the present invention comprises a matrix is an acrylic resin. Such acrylic resin can comprise methyl methacrylate monomer (MMA) and or Polymethyl methacrylate (PMMA). This invention accordingly provides the advantage that in the aircraft hydraulic liquid leakage monitor of present invention the composite comprises nickel powder in acrylic matrix.
In the aircraft of present the aircraft hydraulic liquid leakage monitor according to any one of the aspects described above, have a display for instance a display screen which after exposure to hydraulic liquid demonstrates that the resistance in the composite increases which after can be displayed in that the curve of resistance (Ohm) vs. time (min) shows an increase in the resistance.
In a particular aspect concerning the aircraft of present invention the the aircraft hydraulic liquid leakage monitor can have one of the following features it surrounds an hydraulic tube whereby the integral length hydraulic tube has 10 m or more than 1 m or whereby the diameter of tube has a diameter of 1 cm or more than 0.5 cm or whereby the diameter of tube has a diameter of 1 between 0.7 and 1,2 cm and whereby in an advantageous embodiment the sensing material covered surface of said such hydraulic tube is about 0,30 m².
The aircraft hydraulic liquid leakage monitor in connection to the aircraft's hydraulic system according to any one of the aspects of present invention, whereby volume to add when layers have approx. 100 micron is between 25 - 35 cm³ and preferably 29 - 31 cm³

In a particular embodiment, the aircraft hydraulic liquid leakage monitor according to the present invention has a the matrix which is an acrylic resin with a density between 0.5 to 1.5 g/cm³, preferably between 0.8 and 1.2 g/cm³, more preferably 0.9 and 1.1 g/cm³ and most preferably around 1 g/cm³
In yet another particular embodiment, the aircraft hydraulic liquid leakage monitor according to the present invention comprising a controller based on a software assisted measurement system and control algorithm. This controller can have a computer readable medium tangibly embodying computer code executable on a processor. In a particular embodiment this processor is connected to provide a control signal to an actuator configured to signal or alarm the hydraulic liquid leakage and more particular this processor can be connected to provide a control signal to an actuator configured to alert pilot or third party and yet more particular this processor is connected to provide a control signal to an actuator configured to locate the aircraft hydraulic liquid leakage defect.
In one aspect of the invention, the aircraft hydraulic liquid leakage monitor according to any one of the embodiments described above has a controller that operates as safety fuse for leaking hydraulic liquids whereby noise (small conductance variations that occur during operations due to temperature variations, aging of adhesives etc) is disregarded by the processor but whereby an essentially loss of conductivity noise is regarded as an aircraft hydraulic liquid leakage. It may furthermore comprise a memory for storing the information signals and at least one transmitter for transmitting information signals to a base station adapted to receive information signals. This base station can be adapted to transmit interrogation signals. Furthermore the at least one transmitters can be formed by transponders which are adapted to receive the interrogation signals and to transmit information signals stored in the memory in response to receiving an interrogation signal and the monitor can be characterized in that at least one transmitter or transponder is adapted to receive and transmit signals in the ether.
Furthermore in a particular aspect of present invention the aircraft hydraulic liquid leakage monitor according to any one of the embodiments described above is characterized in that at least the base station is adapted to receive and transmit signals via a telephone network or the transmitter or transponder is adapted for information communication via a mobile telephone network. These aircraft hydraulic liquid leakage monitor according to any one of the previous embodiments can be used to enhance passenger's safety or to detect presence of leaked hydraulic liquids at a very early stage.

Particular and preferred aspects of the invention are set out in the accompanying independent and dependent claims. Features from the dependent claims may be combined with features of the independent claims and with features of other dependent claims as appropriate and not merely as explicitly set out in the claims.

Thus, the claims following the detailed description are hereby expressly incorporated into this detailed description, with each claim standing on its own as a separate embodiment of this invention.

Further scope of applicability of the present invention will become apparent from the detailed description given hereinafter. However, it should be understood that the detailed description and specific examples, while indicating preferred embodiments of the invention, are given by way of illustration only. It is to be understood that both the foregoing general description and the following detailed description are exemplary and explanatory only and are not restrictive of the invention, as claimed.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a curve of resistance (Ohm) vs. time (min) showing the increase in the resistance of Ni/Acryl composite after exposing to SKYDROL 500, tested on conductive paper tape.
FIG. 2 is a curve of resistance (Ohm) vs. time (min) showing the increase in the resistance of Ni/Acryl composite after exposing to SKYDROL 500, tested using a breather-bleeder.
FIG. 3 is a curve of resistance (Ohm) vs. time (min) showing the increase in the resistance of Ni/Acryl composite after exposing to SKYDROL ® 500 B, tested with real hydraulic tube and conductive paper tape.

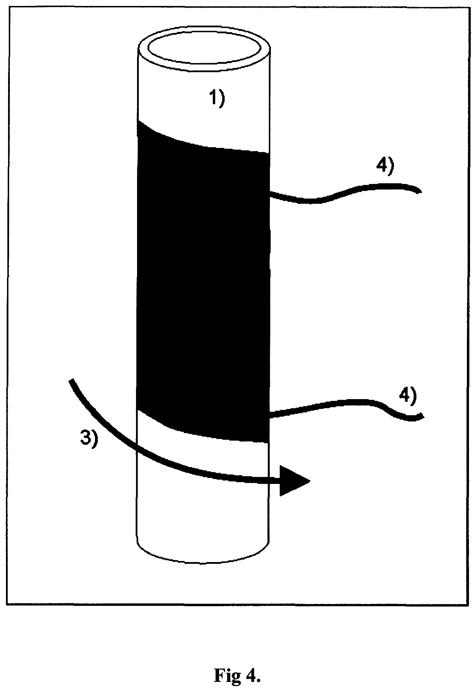

FIG. 4 is a drawing that displays a possible set up for detecting hydraulic liquids, which comprises an hydraulic tube [1], an isolating tape or coating [2] (permeable for hydraulic liquid, such as Skydrol ® 500 B) after deposition impregnated with COPC based sensing coating (e.g. composite nickel powder in acrylic matrix, such as from Holland Shielding (Conductive nickel coating 3801), a winding direction for tape [3] (to prevent that the conducting COPC based sensing coating (comprising the conducting composite) makes a short-cut with the hydraulic tube during deposition and electrodes [4] for measuring the resistance (deposed in with flex in COPC based sensing coating)

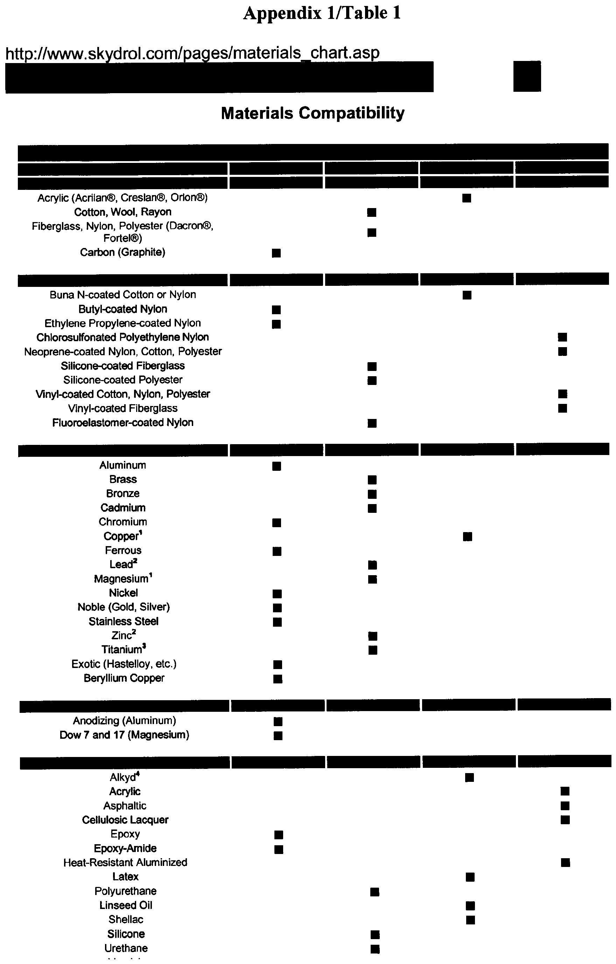

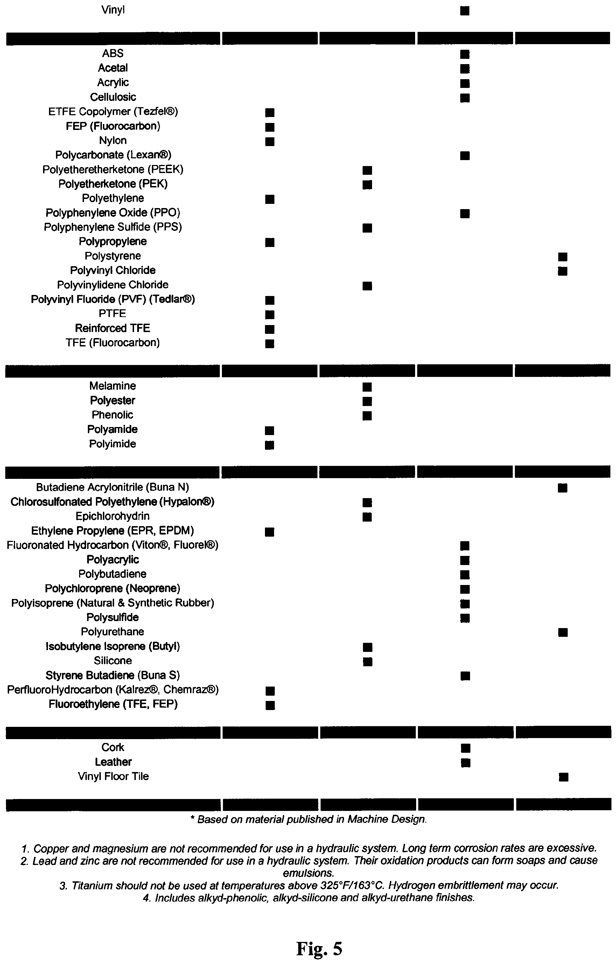

FIG. 5 is a table with an overview of materials resistance to Attack by Aviation Phosphate Ester Fluids such as SKYDROL.

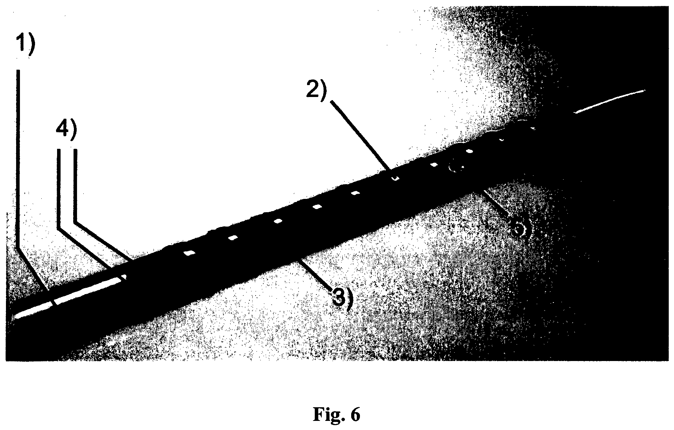

FIG. 6 [1] is an hydraulic tube or an hydraulic fluid guidance tube, [4] are the electric contacts for instance the electrodes for measuring the resistance, [2] is zone on the hydraulic tube which is covered by an isolating tape or coating on said the hydraulic tube or guidance tube which isolating or non conductive tape or coating is permeably for hydraulic fluid for instance for the hydraulic liquid, Skydrol ® 500 B or an hydraulic fluid guidance tube. This zone is not covered by sensing material. [3] is the sensing area for instance a coating comprising composite nickel powder in acrylic matrix, such as from Holland Shielding (Conductive nickel coating 3801). This sensing area covers the isolating tape or non conductive coating for preventing in a non defaulting condition that it makes direct contact with said the hydraulic tubing and [5] demonstrates a potential exit hole for instance a pinhole crack emitting aerosols

### Detailed Description

### DETAILED DESCRIPTION OF EMBODIMENTS OF THE INVENTION

### Definitions

In this application, the term "percolation" is assigned to the theory of connectivity of particles in randomised lattice structures. The most famous example are conductive polymers, i.e. materials that are used as electrical conducting glues or adhesives.

SKYDROL is one type of hydraulic fluid used in the aviation industry, although the current invention can be adapted for use with other fluids.

Aircraft hydraulic fluids fall under various specifications. There are the common petroleum-based such as Mil-H-5606: Mineral base, flammable, fairly low flashpoint, usable from -65 °F (-54 °C) to 275 °F (135 °C), red color, Mil-H-83282: Synthetic hydrocarbon base, higher flashpoint, self-extinguishing, backward compatible to -5606, red color, rated to -40 °F (-40 °C) degrees and Mil-H-87257: A development of -83282 fluid to improve its low temperature viscosity. There are the Phosphate-ester based aircraft hydraulic fluids such as BMS 3-11: Skydrol 500B-4, Skydrol LD-4, Skydrol 5 and Exxon HyJetIV-A plus - Typically light purple, not compatible with petroleum-based fluids, will not support combustion.
"In the proximity of the percolation threshold" means that the percolation conductivity is essentially interrupted if a relevant amount of solvent (harmful quantity of hydraulic liquids) has entered the composite, i.e. the disappearance of conductivity is a consequence of the absorption of the solvent into the embedding matrix (thus by transition through the threshold of percolation conductivity (collapse of percolation conductivity, COPC) into the non-conductive state).
The acrylic resin must be conductive (e.g. company: Holland shielding - conductive painting 3801) and sensitive to SKYDROL attack, or towards another type of hydraulic fluid.
In addition, the acrylic resin used is of low flammability (as used in printed circuits, similar to Plexiglas frequently applied in aircraft), to conform to aircraft safety regulations.
Wiring to be done with certified cables (e.g. type ASNE 0261).
The following detailed description of the invention refers to the accompanying drawings. The same reference numbers in different drawings identify the same or similar elements. Also, the following detailed description does not limit the invention. Instead, the scope of the invention is defined by the appended claims and equivalents thereof.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.
Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.
Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.
It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to the devices consisting only of components A and B. It means that with respect to the present invention, the only relevant components of the device are A and B.

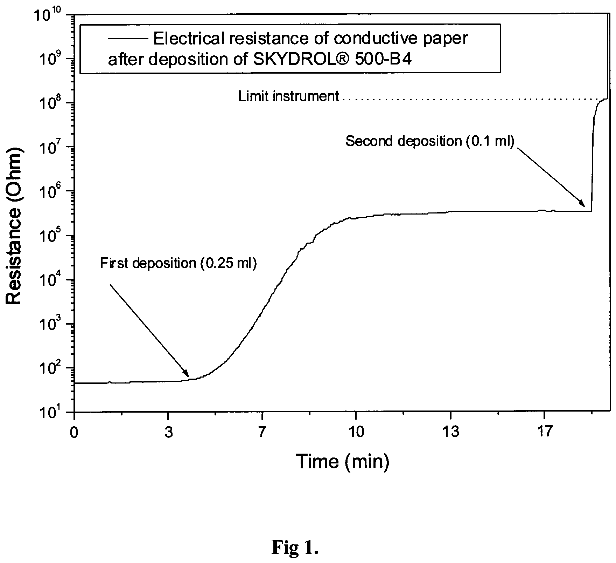

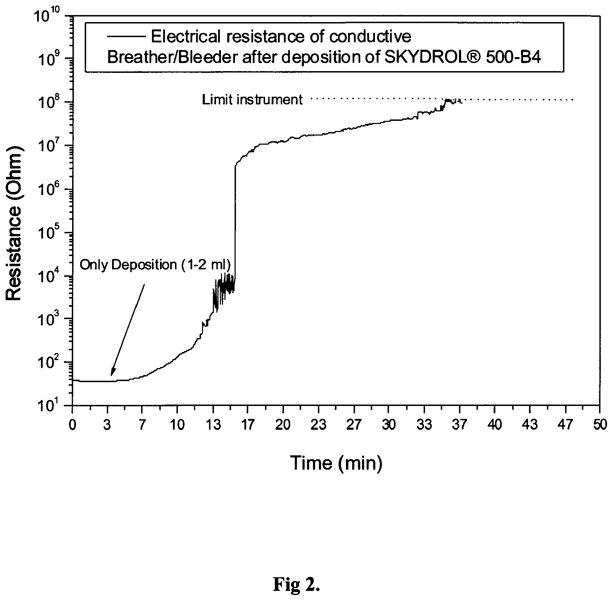

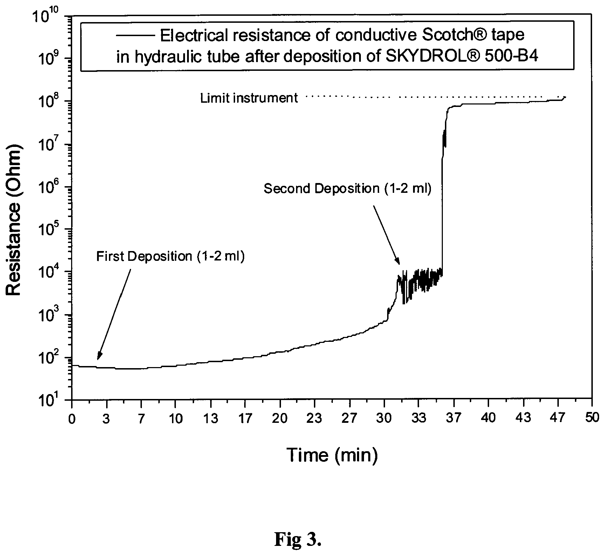

In the description provided herein, numerous specific details are set forth. However, it is understood that embodiments of the invention may be practiced without these specific details. In other instances, well-known methods, structures and techniques have not been shown in detail in order not to obscure an understanding of this description.
In the present invention, the defect in the hydraulic tubes is detected by relatively small quantities of leaking hydraulic liquids. An interrupt the electrical conductance, in a composite conducting compound, with the leaking fluid provides a signal.
Currently the most used aviation hydraulic fluid is Skydrol which is an advanced fire resistant aviation hydraulic fluid manufactured by Solutia Inc. There are various lines of Skydrol including Skydrol 500B-4, Skydrol LD-4, and Skydrol 5. Skydrol, made up of a group of chemical additives dissolved into a fire-resistant phosphate ester base stock has been approved by most airframe manufacturers including Airbus Industries, Boeing and British Aerospace and has been used in their products for over 40 years.
The applicability of the integral system could already be shown in relevant examples of the present application which for instance demonstrate the integral system for the monitoring of hydraulic deficiencies of an hydraulic systems with Skydrol ® 500 B.
An appropriate matrix for the conducting composite in an embodiment of present invention is used in regards to SKYDROL (see Appendix 1/Table 1). For instance an acrylic painting offers no protection/resistance against an attack by SKYDROL (there are also other potential matrix materials). Accordingly, a conducting coating (comprising the conducting composite) based on an acrylic matrix can be used (see Fig. 1-3). The interruption of the conductance will be influenced by many factors. A major factor is the surface of the acrylic coating that can be attacked by SKYDROL, further factors are the temperature and the overall volume of the conducting coating.
Prior to the deposition of the sensing layer, the tubes should be coated with a non-conducting material that is sufficiently heat-resistant (approx until 120 °C) and that hat to be vulnerable to SKYDROL. This is to prevent direct contact between the conducting layer and the metallic tube. Since the relatively high temperatures in the surrounding of the tubes, traces of electrolytes are removed and the risk of galvanic corrosion is extremely limited. After this, the primer is coated with the sensing conducting acrylic coating. There could be a final non-conducting coating to protect the conducting acrylic coating.

A coat of fabric for instance a breather-bleeder can be used, that is wrapped around the tube, to absorb hydraulic liquids. The conducting coating might also be directly sprayed on the breather-bleeder. The whole set-up could finally be locked by a pressure resistant coat made of metallic tape or fibre-reinforced epoxy resin. Measurement can be performed offline (i.e. not during flight) and no additional electronics on board are needed, if so desired.

Other embodiments of the invention will be apparent to those skilled in the art from consideration of the specification and practice of the invention disclosed herein.

It is intended that the specification and examples be considered as exemplary only.
Each and every claim is incorporated into the specification as an embodiment of the present invention. Thus, the claims are part of the description and are a further description and are in addition to the preferred embodiments of the present invention.

Each of the claims set out a particular embodiment of the invention.

### EXAMPLES

The defect in the hydraulic tubes is detected by relatively small quantities (less than 1 millilitres) of leaking hydraulic liquids. Such is sufficient to interrupt the electrical conductance in a conducting composite. To find the appropriate matrix for the conducting composite, the materials chart of Skydrol ® was consulted. It was found that acrylic painting offers no protection/resistance against an attack by Skydrol ® 500 B (there are also other potential matrix materials). Accordingly, a conducting coating based on an acrylic matrix was selected. The interruption of the conductance will be influenced by many factors. A major factor is the surface of the acrylic layer that can be attacked by Skydrol ® 500 B, further factors are the temperature and the overall volume of the conducting coating.
*Example 1:* A piece of paper was for some seconds sprayed with conducting composite commercially available from Holland Shielding (Conductive nickel coating 3801). It is an acrylic painting containing nickel as conducting component. After a drying time of 16 hours, the resistance was measured with a digital multimeter (Keithley 2000) to be in the range of 50 Ohm. After exposing a part of the paper strip to a drop op Skydrol ® 500 B (about 250 micro liters) the resistance grew sigmoidally to about 200 kOhm. After a second deposition of about 100 micro liters the resistance jumped until 100 MOhm, being the limit of the instrument. The curve shown in the diagram (figure 1) represents a kinetic process driven by the diffusion of Skydrol ® 500 B into the acrylic matrix, i.e. when changing e.g. the mass of the sample, the initial liquid amount, exposed surface etc. the curve would change its kinetic parameters.
*Example 2:* In a second set-up, a piece of breather bleeder (heat resistant tissue used in epoxy resin composite production) was for some seconds sprayed with conducting composite commercially available from Holland Shielding (Conductive nickel coating 3801). It is an acrylic painting containing nickel as conducting component. After a drying time of 16 hours, the resistance was measured with a digital multimeter (Keithley 2000) to be in the range of 30 Ohm. After exposing a part of the breather bleeder to a drop op Skydrol ® 500 B (about 1 -2 milliliters) the resistance grew essentially sigmoidally to about 100 MOhm, being the limit of the instrument. The curve shown in the diagram (figure 1) represents a kinetic process driven by the diffusion of Skydrol ® 500 B into the acrylic matrix, i.e. when changing e.g. the mass of the sample, the initial liquid amount, exposed surface etc. the curve would change its kinetic parameters.
*Example 3:* In a third set-up, an original hydraulic tube (British Aerosystems) was covered with wrapped paper tape (Scotch). A syringe needle was deposed under the tape to enable an insert of hydraulic liquid for testing the system. The outside of that tape was for some seconds sprayed with conducting composite commercially available from Holland Shielding (Conductive nickel coating 3801). It is an acrylic painting containing nickel as conducting component. After a drying time of 16 hours, the resistance was measured with a digital multimeter (Keithley 2000) to be in the range of 80 Ohm. After filling Skydrol ® 500 B into the syringe, the liquid was spread by the needle and has moved by gravity, capillarity and diffusion into the paper tape. After deposition of a first amount (1-2 ml) the resistance grew until the range of 1 kOhm. After exposing the syringe a second time (about 1 -2 milliliters) the resistance grew essentially sigmoidally to about 100 MOhm, being the limit of the instrument. The curve shown in the diagram (figure 1) represents a kinetic process driven by the diffusion of Skydrol ® 500 B into the acrylic matrix, i.e. when changing e.g. the mass of the sample, the initial liquid amount, exposed surface etc. the curve would change its kinetic parameters.

An important feature of this invention is the stability of the non-conducting state. Once, a relevant amount of liquid (1 milliliters) has entered the space between hydraulic tube area and paper tape, the sensor will absorb this liquid because the leaking liquid has to pass the position of the sensor. The absorbed liquid interrupts the electrical contact at a certain position. Drying of the sensor is extremely slow due to the low vapor pressure of Skydrol. It could be shown that the extraordinary high resistance will be maintained for many days. This means that the read-out of the sensor must not be done during flight operations, but it can be done by electronic devices that are not part of the operational electronics.

Some embodiments of the invention are set forth in claim format directly below:
1) An aircraft with an improved landing or taking off security means, characterised in that the aircraft comprises a hydraulic liquid leakage monitor for detecting of aircraft hydraulic liquid leakage in situ from the aircraft hydraulic system whereby the aircraft hydraulic liquid conduit that is at least in part surrounded by a sensing means (sensing tape, sheet, fabric or coating) [2] that is permeable for aircraft hydraulic liquid (such as Skydrol ® 500 B) and that is coated or is winded around the hydraulic tube [1] to be sensed for an hydraulic fluid escape and whereby the sensing means comprises or is impregnated with a sensing material that comprises a composite comprising at least two components. 1) particles or powder of an electrically-conductive material dispersed in 2) an matrix that is solvable to aircraft hydraulic fluid whereby the concentration, dispersity and/or orientation of the electrically-conductive particles are tailored to be in the proximity of the percolation threshold in a way that the composite itself is normally in the electrically-conductive state but has the percolation conductivity interrupted after entering of aircraft hydraulic fluid into the composite [2] and further comprising electrodes [4] for measuring resistance in sensing material [2].
2) The aircraft with aircraft hydraulic liquid leakage monitor according to embodiment 1, wherein the conductivity of the sensing material is interrupted as consequence of the absorption of the aircraft hydraulic fluid into the matrix embedding the electrically-conductive material powder or particles by transition through the threshold of percolation conductivity (collapse of percolation conductivity, COPC) into the non-conductive state.
3) The aircraft with aircraft hydraulic liquid leakage monitor according to any one of the embodiments 1 to 2, whereby the aircraft hydraulic liquid leakage monitor comprises the sensing coating, tape, sheet or fabric [2] surrounding or winded around the hydraulic tube [1] such to capture into the sensing materials the leaked hydraulic liquids or part of the that are otherwise dispersed into an aerosol due to the high pressure difference between the outside and the inside of the hydraulic tube or conduit.
4) The aircraft with aircraft hydraulic liquid leakage monitor according to any one of the embodiments 1 to 3, whereby there is a non conducting for aircraft hydraulic fluid permeable coating between the sensing tape, sheet, fabric or coating and the aircraft hydraulic liquid conduit so that the sensing tape, sheet, fabric or coating does in a non-leak condition is not in direct contact with the aircraft hydraulic liquid conduit , is isolated from or is not conductively connected to the hydraulic liquid conduit.
5) The aircraft with aircraft hydraulic liquid leakage monitor according to any one of the previous embodiments, whereby the aircraft hydraulic liquid leakage monitor comprises a sensing tape, sheet, fabric or coating in the form of a strip or wire and so arranged around the aircraft hydraulic liquid conduit that at least one sensing strip or sensing wire is formed with slits between the sensing strip or sensing wire.
6) The aircraft with aircraft hydraulic liquid leakage monitor according to any one of the previous embodiments 1 to 5, whereby the slit comprises the exposed non conductive material surrounding said the aircraft hydraulic liquid conduit.
7) The aircraft with aircraft hydraulic liquid leakage monitor according to any one of the previous embodiments 1 to 5, whereby the slit comprises exposed surface of the aircraft hydraulic liquid conduit.
8) The aircraft with aircraft hydraulic liquid leakage monitor according to any one of the previous embodiments, whereby the at least one sensing strip or sensing wire is being arranged as a coil of two or more turns and whereby the spirals or winds is contiguous with a space between or the sensing strip or sensing wire so arranged that each strip or wire from one elongated unit without contacts or interconnections between the spirals or winds.
9) The aircraft with aircraft hydraulic liquid leakage monitor according to any one of the previous embodiments, whereby the at least one sensing strip or sensing wire helical engaged around said the aircraft hydraulic fluid conduit with a contiguous slit, groove or space between the spirals or winds of the helix.
10) The aircraft with aircraft hydraulic liquid leakage monitor according to any one of the previous embodiments, whereby at a condition of leak the contiguous slit, groove or space for a hydraulic liquid flow.
11) The aircraft with aircraft hydraulic liquid leakage monitor according to any one of the previous embodiments, whereby in a non leak condition the sensing strip or sensing wire is in an electrically-conductive state but when the hydraulic fluid penetrates in said the sensing strip or sensing wire this switches into the non-conductive state and a hydraulic fluid leak is monitored in said aircraft.
12) The aircraft with aircraft hydraulic liquid leakage monitor according to any one of the previous embodiments, whereby in a non-leak condition the sensing strip or sensing wire is in an electrically-conductive state but when the hydraulic fluid attacks or destroys a zone in the sensing strip or sensing wire this switches into the non-conductive state and an hydraulic fluid leak is monitored in said aircraft.
13) The aircraft with aircraft hydraulic liquid leakage monitor according to any one of the previous embodiments, whereby the sensing strip or sensing wire is a circular electrically conductive coil core around the aircraft hydraulic fluid conduit with said the slit between said each wining or spiral.
14) The aircraft with aircraft hydraulic liquid leakage monitor according to any one of the previous embodiments, whereby the sensing strip is a mm strips and the slit is a mm slit.
15) The aircraft with aircraft hydraulic liquid leakage monitor according to embodiment 14, whereby the mm strip has a broadness in the range of 1 mm to 100 mm and the slid has a broadness in the range of 1 mm to 100 mm and a length in the cm or meter range.
16) The aircraft with aircraft hydraulic liquid leakage monitor according to embodiment 14, whereby the mm strip has a broadness in the range of 1 mm to 10 mm and the slit has a broadness in the range of 1 mm to 10 mm.
17) The aircraft with aircraft hydraulic liquid leakage monitor according to any one of the previous embodiments 1 to 16, whereby the strip has a height in the µm range for instance 10 µm to 500 µm
18) The aircraft according to any one of the previous embodiments 1 to 16, whereby the slit has depth in the range in the µm range for instance in a range of a value between 10 µm and 500 µm.
19) The aircraft with aircraft hydraulic liquid leakage monitor according to any one of the previous embodiments, whereby the hydraulic liquid leakage monitor is real-time.
20) The aircraft with aircraft hydraulic liquid leakage monitor according to any one of the previous embodiments, whereby the matrix of the sensing tape, sheet, fabric or coating does not resist an attack by used aviation hydraulic fluid in the hydraulic aircraft system.
21) The aircraft with aircraft hydraulic liquid leakage monitor according to any one of the previous embodiments, whereby the aircraft hydraulic liquid leakage monitor, wherein the conductive state of the matrix of the sensing tape, sheet, fabric or coating does not resist an attack by used aviation hydraulic fluid in the hydraulic aircraft system.
22) The aircraft with aircraft hydraulic liquid leakage monitor according to any one of the previous embodiments 1 to 21, whereby the sensing tape, sheet, fabric or coating comprises a non porous matrix.
23) The aircraft with aircraft hydraulic liquid leakage monitor according to any one of the previous embodiments 1 to 21, the sensing tape, sheet, fabric or coating comprises a not nano- micro-, meso- or macroporous.
24) The aircraft with aircraft hydraulic liquid leakage monitor according to any one of the previous embodiments 1 to 21, the non conductive or isolating material between said the hydraulic fluid conduit and the sensing tape, sheet, fabric or coating is a non porous matrix.
25) The aircraft with aircraft hydraulic liquid leakage monitor according to any one of the previous embodiments 1 to 21, the non conductive or isolating material between said the hydraulic fluid conduit and the sensing tape, sheet, fabric or coating is a non conductive or isolating material not nano- micro- , meso- or macroporous .
26) The aircraft with aircraft hydraulic liquid leakage monitor according to any one of the previous embodiments 1 to 25, whereby the matrix of the sensing tape, sheet, fabric or coating does not resist an attack by or contact with aviation phosphate ester fluids.
27) The aircraft with aircraft hydraulic liquid leakage monitor according to any one of the previous embodiments 1 to 25, whereby the matrix of the sensing tape, sheet, fabric or coating does not resist an attack by or contact with a phosphate-ester based aircraft hydraulic fluid.
28) The aircraft with aircraft hydraulic liquid leakage monitor according to any one of the previous embodiments 1 to 25, whereby the matrix of the sensing tape, sheet, fabric or coating does not resist an attack by or contact with aircraft hydraulic fluids of the group consisting of BMS 3-11: Skydrol 500B-4, Skydrol LD-4, Skydrol 5 and Exxon HyJetIV-A plus.
29) The aircraft with aircraft hydraulic liquid leakage monitor according to any one of the previous embodiments 1 to 25, whereby the matrix of the sensing tape, sheet, fabric or coating does not resist an attack by or contact with aircraft hydraulic fluid, Skydrol ® 500 B
30) The aircraft with aircraft hydraulic liquid leakage monitor according to any one of the previous embodiments 1 to 29, whereby the conductive particles are of the group consisting metal particle, a particle coated by said metal, a carbon black particles or particles of conductive ceramics.
31) The aircraft with aircraft hydraulic liquid leakage monitor according to any one of the previous embodiments 1 to 29, whereby the metal particle is nickel, cupper or silver or a particle coated with nickel, cupper or silver.
32) The aircraft with aircraft hydraulic liquid leakage monitor according to any one of the previous embodiments 1 to 29, whereby the matrix of the sensing tape, sheet, fabric or coating is an acrylic resin
33) The aircraft with aircraft hydraulic liquid leakage monitor according to any one of the previous embodiments 1 to 29, whereby the acrylic resin comprises methyl methacrylate monomer (MMA) and or Polymethyl methacrylate (PMMA).
34) The aircraft with aircraft hydraulic liquid leakage monitor according to any one of the previous embodiments 1 to 29, whereby the composite comprises nickel powder in acrylic matrix
35) The aircraft with aircraft hydraulic liquid leakage monitor according to any one of the previous embodiments 1 to 29, whereby after exposure to hydraulic liquid the resistance in the composite increases which can be displayed on a screen after processing in that the curve of resistance (Ohm) vs. time (min) shows an increase in the resistance
36) The aircraft with aircraft hydraulic liquid leakage monitor according to any one of the previous embodiments 1 to 29, whereby the integral length hydraulic tube has 10 m or more than 1 m.
37) The aircraft with aircraft hydraulic liquid leakage monitor according to any one of the previous embodiments 1 to 29, whereby the diameter of tube has a diameter of 1 cm or more than 0.5 cm.
38) The aircraft with aircraft hydraulic liquid leakage monitor according to any one of the previous embodiments 1 to 29, whereby the diameter of tube has a diameter of 1 between 0.7 and 1,2 cm.
39) The aircraft with aircraft hydraulic liquid leakage monitor according to any one of the previous embodiments 1 to 29, whereby the with sensing material covered surface is about 0,30 m²
40) The aircraft with aircraft hydraulic liquid leakage monitor according to any one of the previous embodiments 1 to 29, whereby volume to add when layers have approx. 100 micron is between 25 - 35 cm³ and preferably 29 - 31 cm³
41) The aircraft with aircraft hydraulic liquid leakage monitor according to any one of the previous embodiments 1 to 29, whereby the matrix of the sensing tape, sheet, fabric or coating is an acrylic resin with a density between 0.5 to 1.5 g/cm³, preferably between 0.8 and 1.2 g/cm³, more preferably 0.9 and 1.1 g/cm³ and most preferably around 1 g/cm³
42) The aircraft with aircraft according to any one of the previous embodiments 1 to 29, comprising a controller based on a software assisted measurement system and control algorithm.
43) The aircraft with aircraft hydraulic liquid leakage monitor of embodiment 42, whereby the controller has a computer readable medium tangibly embodying computer code executable on a processor.
44) The aircraft with aircraft hydraulic liquid leakage monitor of embodiment 43, whereby the processor is connected to provide a control signal to an actuator configured to signal or alarm the hydraulic liquid leakage.
45) The aircraft with aircraft hydraulic liquid leakage monitor of embodiment 43, whereby the processor is connected to provide a control signal to an actuator configured to alert pilot or third party
46) The aircraft with aircraft hydraulic liquid leakage monitor of embodiment 43, whereby the processor is connected to provide a control signal to an actuator configured to locate the aircraft hydraulic liquid leakage defect
47) The aircraft with aircraft hydraulic liquid leakage monitor according to any one of the embodiments 42 to 46, whereby the controller operates as safety fuse for leaking hydraulic liquids whereby of noise small conductance variations that occur during operations (temperature variations, aging of adhesives etc) is disregarded by the processor but whereby an essentially loss of conductivity noise is regarded as an aircraft hydraulic liquid leakage.
48) The aircraft with aircraft hydraulic liquid leakage monitor according to any one of the embodiments 1 to 47, comprising a memory for storing the information signals and at least one transmitter for transmitting information signals to a base station adapted to receive information signals.
49) The aircraft with aircraft hydraulic liquid leakage monitor of embodiment 48, characterized in that the base station is adapted to transmit interrogation signals.
50) The aircraft with aircraft hydraulic liquid leakage monitor according to any one of the embodiments 42 to 49, whereby the at least one transmitters is formed by transponders which are adapted to receive the interrogation signals and to transmit information signals stored in the memory in response to receiving an interrogation signal.
51) The aircraft with aircraft hydraulic liquid leakage monitor according to any one of the embodiments 42 to 49, characterized in that at least one transmitter or transponder is adapted to receive and transmit signals in the ether.
52) The aircraft with aircraft hydraulic liquid leakage monitor according to any one of the embodiments 42 to 51, characterized in that at least the base station is adapted to receive and transmit signals via a telephone network.
53) The aircraft with aircraft hydraulic liquid leakage monitor according to any one of the embodiments 42 to 51, characterized in that the transmitter or transponder is adapted for information communication via a mobile telephone network.
54) The aircraft with aircraft hydraulic liquid leakage monitor according to any one of the previous embodiments, to enhance passenger's safety.
55) The aircraft with aircraft hydraulic liquid leakage monitor according to any one of the previous embodiments, to detect presence of leaked hydraulic liquids at a very early stage.
56) The aircraft with aircraft hydraulic liquid leakage monitor according to embodiment 55, whereby the matrix is highly solvable to aircraft hydraulic fluid.

## Claims

1. A system that monitors a condition of a hydraulic system for an aircraft, comprising the hydraulic system and a hydraulic liquid leakage monitor for detecting of aircraft hydraulic liquid leakage in situ from the hydraulic system wherein the hydraulic system comprises a hydraulic liquid conduit (1) that is at least in part surrounded by a sensing means (3) that is permeable for aircraft hydraulic liquid and that is coated or is winded around the hydraulic liquid conduit to be sensed for an hydraulic fluid escape and wherein the sensing means comprises a sensing material that comprises a composite comprising at least two components, being 1) particles or powder of an electrically-conductive material dispersed in 2) a matrix that is solvable to aircraft hydraulic fluid wherein the concentration, dispersity and/or orientation of the electrically-conductive particles are tailored to be in the proximity of the percolation threshold in a way that the composite itself is under normal aircraft operations in the electrically-conductive state but has the percolation conductivity interrupted after entering of aircraft hydraulic fluid into the composite and further comprising electrodes (4) for measuring resistance in the sensing material, **characterised in that** the sensing means is in the form of a strip or wire which is helical engaged around the hydraulic liquid conduit with a contiguous slit, groove or space between the spirals or winds of the helix.

2. The system according to claim 1, comprising an electrically isolating and for aircraft hydraulic liquid permeable coating between the sensing means and the hydraulic liquid conduit so that the sensing means in a non-leak condition is electrically isolated from the hydraulic liquid conduit.

3. The system according to claim 2, wherein the coating is exposed in the slit, groove or space.

4. The system according to any one of the preceding claims, wherein the strip or wire has a broadness in the range of 1 mm to 10 mm and the slit, groove or space has a broadness in the range of 1 mm to 10 mm.

5. The system according to any one of the previous claims, wherein the strip or wire has a height in the range of 10 µm to 500 µm.

6. The system according to any one of the previous claims, wherein the matrix does not resist an attack by aviation hydraulic fluid used in the hydraulic system.

7. The system according to any one of the previous claims, wherein the matrix does not resist an attack by or contact with a phosphate-ester based aircraft hydraulic fluid.

8. The system according to any one of the previous claims, wherein the composite comprises conductive particles selected from the group consisting of particles of nickel, copper or silver, particles coated with nickel, cupper or silver, carbon black particles, and particles of conductive ceramics.

9. The system according to any one of the previous claims, wherein the matrix is an acrylic resin.

10. The system according to claim 9, wherein the acrylic resin comprises methyl methacrylate monomer (MMA) and/or polymethyl methacrylate (PMMA).

11. The system according to any one of the previous claims, wherein the composite comprises nickel powder in acrylic matrix.

12. The system according to any one of the claims 9 to 11, wherein the matrix is an acrylic resin with a density between 0.5 to 1.5 g/cm³, preferably between 0.8 and 1.2 g/cm³, more preferably 0.9 and 1.1 g/cm³ and most preferably around 1 g/cm³.

13. The system according to any one of the previous claims, comprising a controller based on a software assisted measurement system and control algorithm, wherein the controller has a computer readable medium tangibly embodying computer code executable on a processor, and wherein the processor is connected to provide a control signal to an actuator configured to signal or alarm a hydraulic liquid leakage.

14. An aircraft comprising the system of any one of the preceding claims.

## Patentansprüche

1. System, das einen Zustand eines Hydrauliksystems eines Flugzeugs überwacht, umfassend das Hydrauliksystem und einen Hydraulikflüssigkeits-Leckagewächter zur Erkennung von Hydraulikflüssigkeitsleckagen aus dem Hydrauliksystem in situ, wobei das Hydrauliksystem eine Hydraulikflüssigkeitsleitung (1), die mindestens teilweise von einem der Hydraulikflüssigkeit eines Flugzeugs gegenüber durchlässigen Abtastmittel (3) umgeben ist, das auf der nach Leckagen abzutastenden Hydraulikflüssigkeitsleitung beschichtet oder darum gewickelt ist, umfasst, und wobei das Abtastmittel ein Abtastmaterial umfasst, das einen Verbundstoff, der mindestens zwei Bestandteile, und zwar 1) Partikel oder Pulver aus einem elektrisch leitenden Stoff, die in 2) einer in der Hydraulikflüssigkeit eines Flugzeugs löslichen Matrix dispergiert ist, umfasst, wobei Konzentration, Dispersität und/oder Orientierung der elektrisch leitenden Partikel derart ausgestaltet sind, dass sie in der Nähe der Perkolationsschwelle liegen, so dass der Verbundstoff selbst im normalen Betrieb des Flugzeugs sich im elektrisch leitenden Zustand befindet, deren Perkolations-Leitfähigkeit aber nach dem Eintritt von Hydraulikflüssigkeit in den Verbundstoff gestört wird, und ferner Elektroden (4) zur Messung des Widerstands im Abtastmaterial umfasst, **dadurch gekennzeichnet, dass** das Abtastmittel in Form eines Streifens oder Draht vorliegt, die sich spiralförmig um die Hydraulikflüssigkeitsleitung herum mit einem angrenzenden Schlitz, Nut oder Raum zwischen den Spiralen oder Windungen der Helix befasst.

2. System nach Anspruch 1, umfassend eine elektrisch isolierende, gegenüber der Hydraulikflüssigkeit eines Flugzeugs durchlässigen Beschichtung zwischen dem Abtastmittel und der Hydraulikflüssigkeitsleitung, damit das Abtastmittel in einem leckagefreien Zustand von der Hydraulikflüssigkeitsleitung elektrisch isoliert wird.

3. System nach Anspruch 2, wobei die Beschichtung im Schlitz, Nut oder Raum frei liegt.

4. System nach einem der vorstehenden Ansprüche, wobei der Streifen oder Draht eine Breite im Bereich von 1 mm bis 10 mm aufweist und der Schlitz, Nut oder Raum eine Breite im Bereich von 1 mm bis 10 mm aufweist.

5. System nach einem der vorstehenden Ansprüche, wobei der Streifen oder Draht eine Höhe im Bereich von 10 µm bis 500 µm aufweist.

6. System nach einem der vorstehenden Ansprüche, wobei die Matrix einem Angriff durch die im Hydrauliksystem verwendete Hydraulikflüssigkeit für Flugzeuge nicht standhält.

7. System nach einem der vorstehenden Ansprüche, wobei die Matrix einem Angriff durch bzw. dem Kontakt mit einer Hydraulikflüssigkeit eines Flugzeugs auf Phosphatesterbasis nicht standhält.

8. System nach einem der vorstehenden Ansprüche, wobei der Verbundstoff leitfähige Partikel umfasst, die aus der nachfolgenden Gruppe gewählt sind: Nickel-, Kupfer- oder Silberpartikel, mit Nickel, Kupfer oder Silber beschichtete Partikel, Russpartikel und leitfähige Keramikpartikel.

9. System nach einem der vorstehenden Ansprüche, wobei die Matrix ein Acrylharz ist.

10. System nach Anspruch 9, wobei das Acrylharz Methylmethacrylatmonomer (MMA) und/oder Polymethylmethacrylat (PMMA) umfasst.

11. System nach einem der vorstehenden Ansprüche, wobei der Verbundstoff Nickelpulver in einer Acrylmatrix umfasst.

12. System nach einem der Ansprüche 9 bis 11, wobei die Matrix ein Acrylharz mit einer Dichte zwischen 0,5 und 1,5 g/cm³, vorzugsweise zwischen 0,8 und 1,2 g/cm³, besonders bevorzugt 0,9 und 1,1 g/cm³ und besonders bevorzugt 1 g/cm³ ist.

13. System nach einem der vorstehenden Ansprüche, umfassend eine Steuerung, die auf einem softwaregestützten Messsystem und Regelalgorithmus basiert, wobei die Steuerung einen computerlesbaren Datenträger aufweist, der auf einem Prozessor ausführbaren Computercode greifbar verkörpert, und wobei der Prozessor derart verbunden ist, dass er einem zur Erzeugung von Signalen zu einem oder Warnungen über einen Austritt von Hydraulikflüssigkeit konfigurierten Aktor ein Steuersignal zuführt.

14. Flugzeug, umfassend das System nach einem der vorstehenden Ansprüche.

## Revendications

1. Système qui surveille l'état d'un système hydraulique pour un aéronef, comprenant le système hydraulique et un dispositif de surveillance de fuite de liquide hydraulique pour la détection d'une fuite de liquide hydraulique d'aéronef in situ du système hydraulique, dans lequel le système hydraulique comprend une conduite (1) de liquide hydraulique qui est entourée au moins en partie d'un moyen de détection (3) qui est perméable au liquide hydraulique d'aéronef et qui est appliqué sur ou enroulé autour de la conduite de liquide hydraulique pour la détection d'échappement de fluide hydraulique et dans lequel le moyen de détection comprend un matériau de détection qui comprend un composite comprenant au moins deux éléments, à savoir 1) des particules ou une poudre d'un matériau électroconducteur dispersée(s) dans 2) une matrice qui est soluble dans un fluide hydraulique d'aéronef dans lequel la concentration, le degré de dispersion et/ou l'orientation des particules électroconductrices sont adaptés pour se trouver à proximité du seuil de percolation d'une manière telle que le composite proprement dit soit à l'état électroconducteur dans des conditions normales de fonctionnement de l'aéronef mais que sa conductivité de percolation soit interrompue après pénétration du fluide hydraulique d'aéronef dans le composite, et comprenant en outre des électrodes (4) permettant de mesurer la résistance du matériau de détection, **caractérisé en ce que** le moyen de détection se présente sous la forme d'une bande ou d'un fil qui vient en prise de manière hélicoïdale autour de la conduite de liquide hydraulique avec une fente, une rainure ou un espace contigu(e) entre les spires ou les enroulements de l'hélice.

2. Système selon la revendication 1, comprenant un revêtement électriquement isolant et perméable au liquide hydraulique d'aéronef entre le moyen de détection et la conduite de liquide hydraulique de sorte que le moyen de détection, en l'absence de fuite, est isolé électriquement de la conduite de liquide hydraulique.

3. Système selon la revendication 2, dans lequel le revêtement est exposé dans la fente, la rainure ou l'espace.

4. Système selon l'une quelconque des revendications précédentes, dans lequel la bande ou le fil ont une largeur dans la plage de 1 mm à 10 mm et la fente, la rainure ou l'espace ont une largeur dans la plage de 1 mm à 10 mm.

5. Système selon l'une quelconque des revendications précédentes, dans lequel la bande ou le fil ont une hauteur dans la plage de 10 µm à 500 µm.

6. Système selon l'une quelconque des revendications précédentes, dans lequel la matrice ne résiste pas à une attaque d'un fluide hydraulique d'aviation utilisé dans le système hydraulique.

7. Système selon l'une quelconque des revendications précédentes, dans lequel la matrice ne résiste pas à une attaque ou au contact d'un fluide hydraulique d'aéronef à base d'ester de phosphate.

8. Système selon l'une quelconque des revendications précédentes, dans lequel le composite comprend des particules conductrices choisies dans le groupe consistant de : des particules de nickel, de cuivre ou d'argent, des particules recouvertes de nickel, de cuivre ou d'argent, des particules de noir de carbone, et des particules de céramiques conductrices.

9. Système selon l'une quelconque des revendications précédentes, dans lequel la matrice est une résine acrylique.

10. Système selon la revendication 9, dans lequel la résine acrylique comprend du monomère méthacrylate de méthyle (MMA) et/ou du poly(méthacrylate de méthyle) (PMMA).

11. Système selon l'une quelconque des revendications précédentes, dans lequel le composite comprend de la poudre de nickel dans une matrice acrylique.

12. Système selon l'une quelconque des revendications 9 à 11, dans lequel la matrice est une résine acrylique ayant une masse volumique entre 0,5 et 1,5 g/cm³, de préférence entre 0,8 et 1,2 g/cm³, de manière davantage préférée entre 0,9 et 1,1 g/cm³, et de manière préférée entre toutes autour de 1 g/cm³.

13. Système selon l'une quelconque des revendications précédentes, comprenant un dispositif de commande basé sur un système de mesure assisté par logiciel et un algorithme de commande, dans lequel le dispositif de commande comporte un support lisible par ordinateur incorporant de manière tangible un code informatique exécutable sur un processeur, et dans lequel le processeur est connecté de manière à fournir un signal de commande à un actionneur conçu pour signaler ou alerter d'une fuite de liquide hydraulique.

14. Aéronef comprenant le système selon l'une quelconque des revendications précédentes.
